# EUROPEAN PATENT APPLICATION

(11) **EP 4 199 453 A1**
(43) Date of publication of application: **21.06.2023**
(21) Application number: 22206985.8
(22) Date of filing: 11.11.2022
(51) Int. Cl.: H04L 41/0895, H04L 41/40, H04L 45/64, G06F 8/51

(54) **PROGRAMMING A PACKET PROCESSING PIPELINE**

(30) Priority: 19.12.2021 US 202163291409 P; 16.02.2022 US 202217673727
(71) Applicant: Intel Corporation, Santa Clara, CA 95054 (US)
(72) Inventor: LIMAYE, Namrata, Fremont, 94539 (US); DALY, Daniel, Santa Barbara, 93111 (US); JAIN, Anjali Singhai, Portland, 97229 (US); CHATTERJEE, Debashis, Fremont, 94539 (US); PARUCHURI, Venkata Suresh Kumar, 560028 Bangalore (IN)
(74) Representative: Rummler, Felix

(57) **Abstract**

Examples described herein relate to a packet processing device that includes a programmable packet processing pipeline that is configured using a virtual switch. In some examples, the programmable packet processing pipeline is to receive configurations from multiple control planes via the virtual switch to configure packet processing actions. In some examples, the virtual switch is to provide inter-virtual execution environment communications. In some examples, the programmable packet processing pipeline is configured using a programming language.

## Description

### RELATED APPLICATION

The present application claims the benefit of priority of U.S. Provisional application 63/291,409, filed December 19, 2021. The contents of that application are incorporated herein in their entirety.

### BACKGROUND

Open Virtual Switch (OVS) is Linux Foundation project that provides a multilayer software virtual switch that can communicate packet traffic among virtual machines executing on a server and virtual machines executing on different servers. Packets that pass to or from a virtual machine can be routed through OVS or a virtual switch. In connection with routing packets, OVS supports IEEE 802.3ad link aggregation group (LAG), IEEE 802.3ad Link Aggregation Control Protocol (LACP), tunneling, port bonding and other networking features as well as access control list (ACL) and quality of service (QoS) policies.

### BRIEF DESCRIPTION OF THE DRAWINGS

FIG. 1 depicts an example system.
FIG. 2 depicts an example system.
FIG. 3 depicts an example system.
FIG. 4 depicts an example system.
FIG. 5 depicts an example process.
FIG. 6 depicts an example packet processing device.
FIG. 7 depicts an example switch.
FIG. 8 depicts an example system.
FIG. 9 depicts an example system.

### DETAILED DESCRIPTION

In some cases, virtual software switches execute on host processors. Cloud service providers (CSPs) attempt to free host processor resources as possible, so that CSPs can rent out utilization of host processor cores to their customers. Programming Protocol-independent Packet Processors (P4) is a protocol and platform-independent domain specific language to describe networking pipelines. After a vendor delivers networking equipment (e.g., packet processing device) to a customer, the customer can configure the equipment using programs based on P4.

Packets associated with flows for which match action rules are not programmed into a packet processing pipeline can trigger an exception at a packet processing device to an Openflow controller for the Openflow controller to indicate how to process the packet. The exception packets can be detected by a Data Plane Development Kit (DPDK) Poll Mode Driver (PMD).

In some cases, use of an Openflow controller for a virtual switch to provide rules for processing packets of a flow based on P4 can lead to loss of details of rules specified by P4-based programming. For example, details of rules concerning longest prefix matches or wildcard matches can be lost. For example, a vRouting application applies longest prefix matches whereas a firewall application can utilize wildcard matches. In cases where details of rules are lost, despite a P4-based rule indicating a manner of processing certain packets, processing of such packets at the packet processing pipeline may trigger exceptions to be generated to the Openflow controller, which can increase a latency of processing of packets and utilize host processor resources that could be used for other purposes.

Operations of a virtual switch can be offloaded from being performed by a host processor to being performed by a programmable hardware pipeline of a packet processing device. Virtual switches can configure operation of a programmable hardware pipeline of a packet processing device from multiple control planes by translating configurations from another language or other semantics such as Openflow into P4-based configurations. The programmable hardware pipeline of a packet processing device can be configured to observe packets and networking states and enforce control plane policies and packet forwarding behavior. In some examples, the programmable hardware pipeline can be configured to perform load balancing and telemetry collection. By offloading virtual switch operations such as configurations of OpenFlow tables to tables in a packet processing device, processor core resources can be freed for other uses.

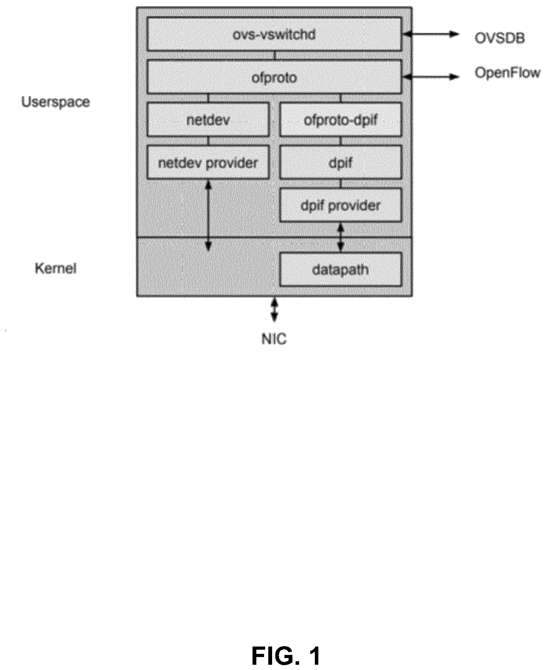

FIG. 1 depicts an example of an implementation of OVS. An ofproto layer provides an Openflow interface to controllers to offload flows and other configuration into an OVS virtual switch. The ofproto layer can manage a bridge interface that includes an Openflow pipeline (e.g., flow tables), port and interface definitions and global configurations for connection tracking, tunneling, mirroring, sampling, cryptographic operations, and LAG. The layers below the ofproto layer provide an interface via a datapath interface (dpif) (e.g., Open vSwitch or Data Plane Development Kit (DPDK)) to a datapath. A kernel layer can provide an interface between userspace and network interface controller (NIC) via a netdev provider interface.

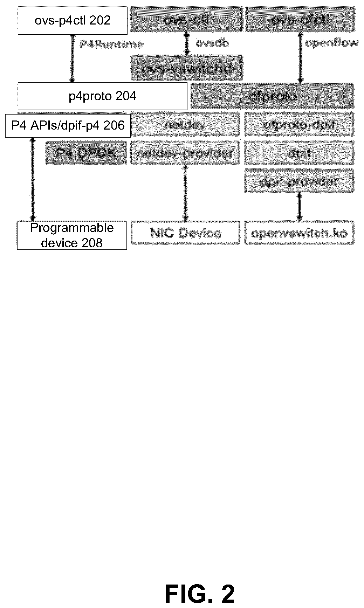

FIG. 2 depicts an example overview of a P4ptoto layer running parallel to the ofproto layer. An OVS consistent controller ovs-p4ctl 202 can configure a P4 consistent runtime using P4ptoto 204. P4ptoto 204 can be configured with a command line interface (CLI) to program P4 flow and configuration tables. P4ptoto 204 can perform parsing to create a P4 pipeline P4Info file based on flow and configuration tables. P4ptoto 204 can configure and manage Linux netdev devices such as ports, interfaces, tunnels, virtual ports, and so forth. Datapath interface (dpif) 214 can provide a P4 programmable datapath to a P4 programmable network interface device pipeline of programmable device 208. The P4 programmable datapath can be consistent with P4-DPDK. Although examples are described with respect to P4, other programming languages can be used such as C, Python, NVIDIA^{®} CUDA^{®}, NVIDIA^{®} DOCA^{™}, Broadcom Network Programming Language (NPL), Linux eBPF, or x86 compatible executable binaries or other executable binaries. Although examples are described with respect to OVS, other examples can use VPP, Stratum, or other VM-to-VM communication switches.

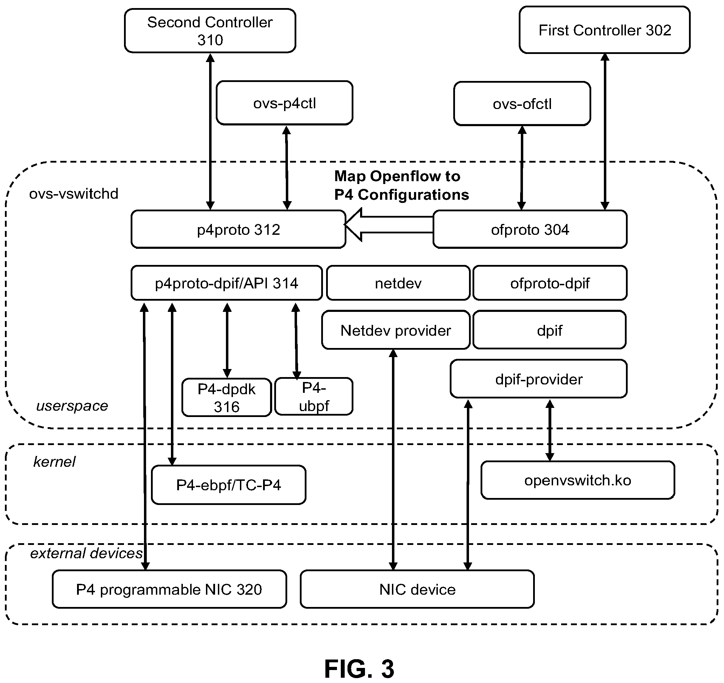

FIG. 3 depicts an example overview of an P4proto layer that can be used with a virtual switch software stack. Multiple control planes can used to program a network interface device with a packet processing pipeline programming language such as P4. For example, the multiple control planes can used to program a packet processing pipeline of programmable NIC 320 using P4-consistent semantics. Multiple P4 Runtime clients can connect and program one or more P4 programmable pipelines of NIC 320.

In some examples, the virtual switch can include an OVS consistent software stack. For example, as part of a first control plane, first controller 302 can implement an Openflow controller and configure OVS ofproto layer 304 of the virtual switch with various configurations. In some examples, OVS configurations can be mapped to P4 Tables, as described herein. An example of an OVS configuration includes VXLAN configuration (e.g., enable or disable use of VXLAN).

As part of a second control plane, second controller 310 can program P4ptoto layer 312 of a virtual switch. In some examples, configurations provided by the first and second control planes can both relate to switching operation for one or more packets of a flow. P4ptoto layer 312 can execute in parallel with ofproto layer 304. P4ptoto layer 312 can configure P4 tables as described herein. An enhanced command line interface (CLI) for P4 can configure P4ptoto layer 312 to convert OpenFlow configurations to P4 mappings. OpenFlow configurations converted to P4 configurations can include one or more of: tables, fields, or match-actions. Megaflow caches can be disabled or unused for offload to P4 datapath to offload the flow provided by controller as is and avoid aggregation and subsequent disaggregation of configurations converted to P4 configurations.

One or more of ofproto 304 and P4proto 312 can be available as part of a library of a virtual switch (e.g., OVS). For example, OVS can be compiled with default options and '-with-p4' to activate P4proto layer 312. P4proto 312 can implement PAruntime and Openconfig Server functionality to communicate with one or more software defined networking (SDN) controllers.

As part of a third control plane, kernel configurations of data plane of P4 programmable NIC 320 can occur. Kernel configurations can be provided to NIC 320 using an interface such as one or more of: Open Compute Project (OCP) SAI, OCP SONiC using Google Remote Procedure Call (gRPC) within OVS, RPC, or others. Examples of kernel configurations include one or more of: routing determination capability based on P4, tunneling of traffic such as VXLAN, Equal-cost multi-path routing (ECMP) with fast reroute (FRR), and others. Kernel configurations can be mapped to P4 Tables.

P4 programmable NIC 320 can include a network interface device with a packet processing pipeline that is programmable using one or more control planes as described herein. A network interface device can be implemented as one or more of: a network interface controller (NIC), SmartNIC, router, switch, forwarding element, infrastructure processing unit (IPU), or data processing unit (DPU).

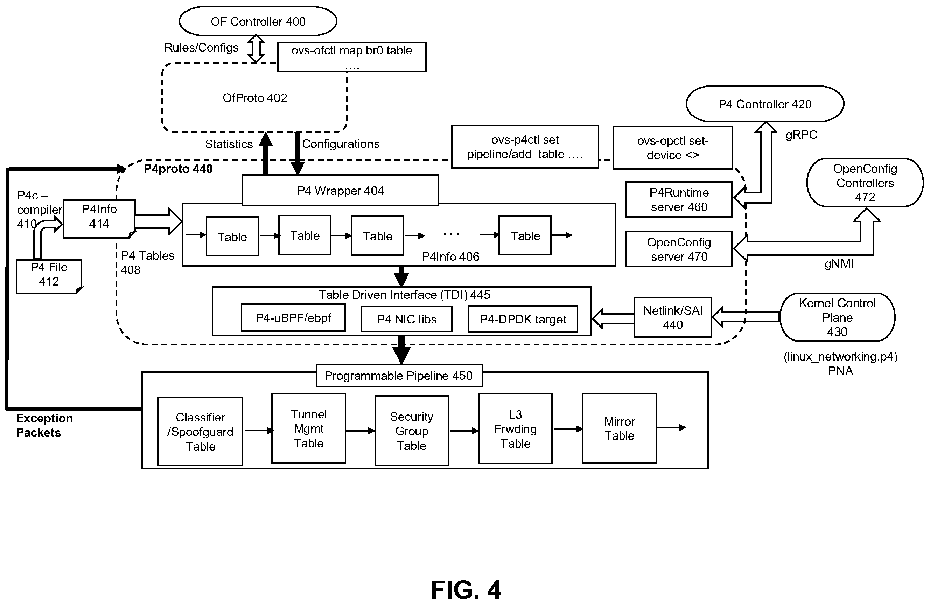

FIG. 4 depicts an example system. An Open vSwitch consistent virtual switch can execute on at least one processor of a server connected to a network interface device or in a processor of the network interface device. In this example, Ofproto and P4proto can be threads running by or within an Open vSwitch virtual switch. Some examples utilize multiple controllers or control planes to configure a programmable pipeline 450 of a network interface device. For example, multiple control planes can include one or more of: Openflow controller 400, P4 controller 420, and kernel control plane 430.

Ofproto 402 can be based on an Open vSwitch library and provide an interface to an OpenFlow (OF) controller 400 to communicate configurations of pipeline 450 using application program interface (API) calls. Example configurations can specify header field value matches and association action(s) related to one or more of: port selection, mirroring is enabled or disabled, use of VXLAN is permitted or not permitted, or other criteria. Ofproto 402 can translate OpenFlow microflow rules from OpenFlow controller 400 into content to be stored in caches (e.g., micro flow and/or mega flow caches) and offload or copy content of micro flow and/or mega flow caches into pipeline 450 of a network interface device. For example, Ofproto 402 can configure operations of pipeline 450 based on an OpenFlow specification v1.0 (2012) from Open Networking Foundation and derivatives, variations, or modifications thereof.

P4c compiler 410 can compile P4 file 412 into P4info 414. P4 file 412 can include a definition or structure of tables (e.g., key and actions) in P4 tables 408 accessed and performed by pipeline 450. In some examples, P4 compiler 410 receives a P4 file as an input and generates a specification file that can be used by P4 DPDK so that control plane in P4Runtime and P4Proto and the dataplane can be built using a same P4 file and has the same table definitions and other data structures. P4-DPDK can execute a poll mode driver (PMD) threads to access packets from a Linux kernel.

An OVS consistent virtual switch can utilize a reactive model for programming whereby OVS manages the network as a series of flows. The information on flows are kept in a flow cache. When a first packet of a new flow arrives at the network interface device, the OVS checks the flow cache and finding no information for the flow, and sends this first packet to OVS user space, where the key matching fields and the associated matching actions for the flow are configured. From that point onwards, subsequent packets can be handled within the OVS data plane (e.g., kernel or in hardware) and the user space code does not have to be invoked.

P4 controller 420 can configure match action rules and operations inserted into the defined tables. P4proto 440 can provide proactive programming of pipeline 450 of a network interface device to process packets of a flow based on match-action configurations. P4proto 440 can configure pipeline 450 directly from Openflow or P4 tables instead of the megaflow or microflow caches that OVS maintains. P4proto 440 can convert OVS configurations (e.g., ovs-db) received via P4 wrapper 404 into P4 table configurations in P4 information (P4info) 406 to enable the features on P4 based programmable data plane pipeline 450. In some examples, P4proto 440 can translate configurations from OVS semantics to P4 semantics. Examples of configurations include tables that define a value in header field match and associated actions (match-action) for one or more: tunnel enablement or disablement, mirroring parameters, security group definition, connection tracking, forwarding (e.g., Layer 3), sampling of a flow (sFlow), LAG, and so forth. P4 pipeline management can include loading or reloading P4 programs, connecting to a pipeline instance, and detecting what P4 pipelines are available on this platform.

A developer familiar with OVS can utilize OVS with P4proto 440 in a similar way as utilizing OVS without P4proto 440. For example, utilization of OVS with or without P4proto 440 can utilize OVS semantics related to connecting to OVSDB, setting up mirrors, debugging, reading statistics, loading/unloading rules. The P4proto 440 can map Openflow semantics to P4 language.

P4proto 440 can read configurations in the OVSDB and map the configurations to P4 tables. The OVSDB client can be notified of new configurations and changes in the already existing configurations. Examples of OVS configurations relate to one or more of: packet mirroring enabled or disabled, VXLAN used or not used, port selection, bridge enabled or disabled, sampling of packets to collect statistics, and so forth. Conversions of OVS configurations to P4-Tables or fixed functions can be programmed into SAI or P4Runtime server 460.

For example, a third control plane, kernel control plane 430 can utilize switch abstraction interface (SAI) as an interface to program a kernel control plane into pipeline 450. SAI can be APIs called from a netlink interface. SAI can communicate with a netlink interface in P4proto 440 and netlink-listener can monitor configuration changes in the kernel modules and programs those changes into the P4-DPDK target dataplane to configure pipeline 450. Examples of programming of programmable pipeline 450 by kernel control plane 430 can include routing determination, tunneling of traffic such as VXLAN, or others.

Table Driven Interface (TDI) 445 can provide an interface to transfer table configurations and content offloads to pipeline 450. Pipeline 450 can be programmable as P4 based data planes such as P4-DPDK, P4-based application specific integrated circuit (ASIC) NICs, P4-based field programmable gate array (FPGA) NIC, P4-ebpf, and so forth.

P4Runtime server 460 component can provide an interface for the P4Runtime controller 420 or client. P4Runtime server 460 can uses PAinfo and bfrtjson as inputs to build the PAInfo. P4Runtime protobufs (e.g., Google protocol buffer object) can be converted into P4 operations by P4proto 440. OpenConfig server 470 can provide an interface for OpenConfig controllers 472 to support certain fixed functions. OpenConfig configurations can add configurations not provided by OVS such as adding a virtual device.

P4 programmable pipeline 450 in one or more network interface devices can apply table configurations and settings based on data received from TDI 445. When pipeline 450 executes P4-DPDK, pipeline 450 processes a packet that is sent to a destination port or dropped. Packets that cannot be processed by pipeline 450 could be sent to controller 400 as exception packets or one of the kernel modules. Pipelines 450 can issue exception packets to Ofproto 402. Exception packets can request support in a hardware datapath for one or more of: defragmentation, IPv6 checksum, OVS L2 functionality (e.g., Address Resolution Protocol (ARP)), and other exceptions or scenarios that pipeline 450 is not programmed to perform.

Some packets destined to the P4 Controller 420 (e.g., because a rule was not found by pipeline 450 in a table) can be forwarded to P4 Runtime server 460. P4Runtime server 460 can forward one or more exception packets to P4 controller 420. Exception packets can be sent to an SDN controller or OF controller 400 from P4Runtime Server 460 or directly to OF controller 400.

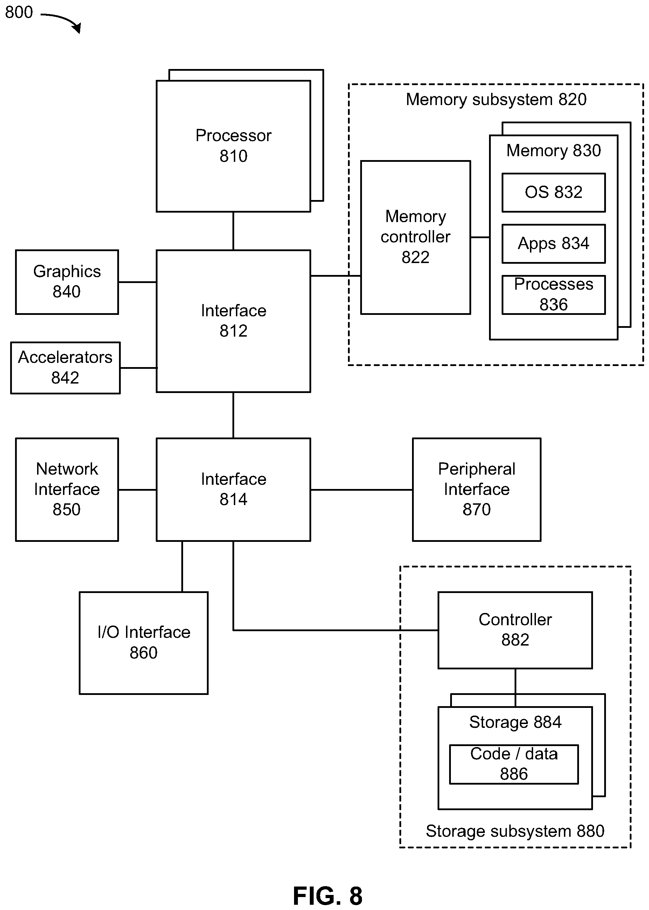

In some examples, OfProto 402 and/or P4proto 440 can be implemented as software or instructions that execute on processors in a system on chip (SoC) in a network interface device that includes pipeline 450 or a server coupled by a device interface to the network interface device that includes pipeline 450. One or more elements depicted in FIG. 4 can be implemented using in a network interface device that includes pipeline 450 and/or a server coupled by a device interface to the network interface device that includes pipeline 450. FIG. 8 describes an example, among others, of a server coupled by a device interface to the network interface device that includes pipeline 450.

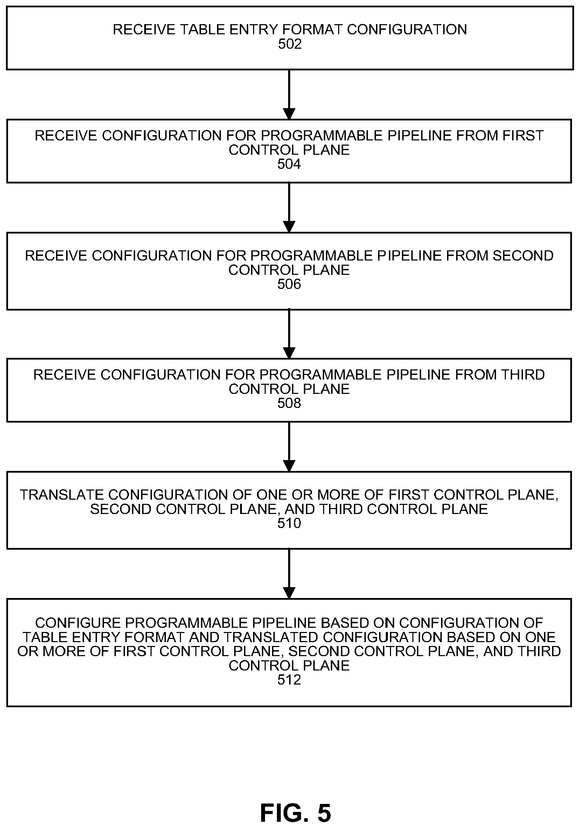

FIG. 5 depicts an example process. The process can be performed by a host system coupled to a network interface device with P4 programmable packet processing pipeline. At 502, table and entry formats utilized by the P4 programmable packet processing pipeline can be configured. For example, a P4 file can be compiled and provided to a translation software. The translation software can convert configurations from a first format to a second format. In some examples, the first format is consistent with Openflow and the second format is consistent with P4, however other formats can be used.

At 504, the translation software can receive configurations from a first control plane in a first format to include in at least one entry of a table. For example, the first control plane can include an Openflow controller or SDN controller. For example, the configurations in a first format can include configurations in Openflow. Example configurations can include header field value matches and association action(s) related to one or more of: port enablement or disablement, mirroring enabled or disabled, VXLAN enabled or disabled, or other criteria.

At 506, the translation software can receive configurations from a second control plane in a second format to include in at least one entry of a table. For example, the second control plane can include a P4 controller. For example, the configurations in a second format can include configurations in P4. Example configurations can include header field value matches and association action(s) related to one or more of: tunnel enable or disable, mirroring enablement/disablement and configuration (e.g., copying packet of one or more flows for transmission through one or more ports to multiple destinations for flows, ports, and destinations are identified in the configuration), security group configuration, connection tracking, forwarding (e.g., Layer 3), flow sampling (sFlow), LAG configuration, and so forth.

At 508, the translation software can receive configurations of a kernel from a third control plane. For example, the configurations of the kernel can include routing determination, tunneling of traffic such as VXLAN, or others.

At 510, the translation software can configure the P4 programmable packet processing pipeline of the network interface device based on configurations from one or more of: the first control plane, second control plane, and third control plane. For example, the translation software can translate a configuration from the first format to the second format and insert the generated translated configuration into at least one table entry based on configuration of table and/or entry.

At 512, the translation software can configure the P4 programmable packet processing pipeline with the generated translated configuration in at least one table entry. For example, the translation software can write the generated translated configuration in at least one table entry to a table or memory accessible to the P4 programmable packet processing pipeline. Thereafter a network interface device with P4 programmable packet processing pipeline can be configured to perform packet processing and forwarding based on OVS or Openflow-based packet processing definitions.

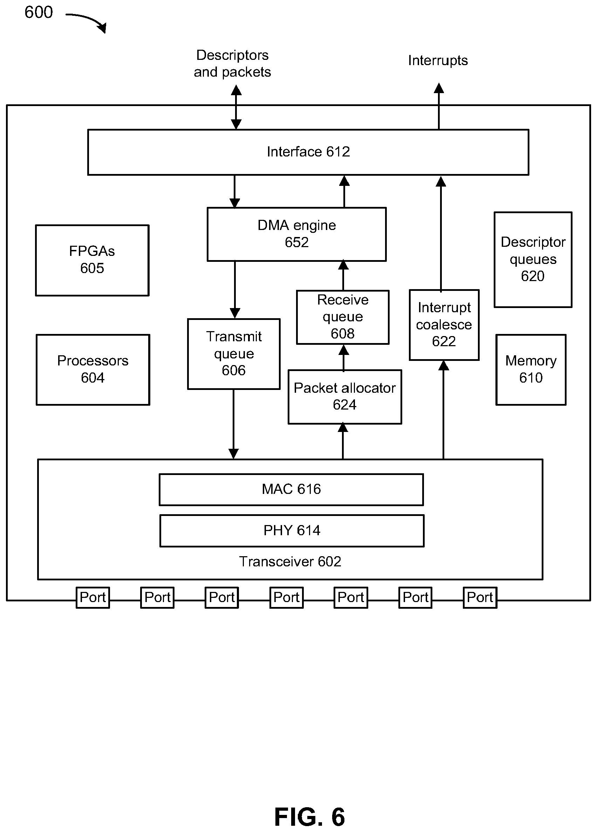

FIG. 6 depicts an example packet processing device that can be used in examples described herein. A packet processing device can include a NIC or network interface device in some examples. A packet processing device can send and/or receive packets with another packet processing device or send and/or receive packets with one or more hosts by performance of a virtual switch. Communications of packets can be among VMs on a same computing platform or server or VMs on different computing platforms or servers. Various device and processor resources in the packet processing device can be programmed using one or more of a virtual switch, first control plane, second control plane, or third control plane, as described herein.

In some examples, packet processing device 600 can be implemented as a network interface controller, network interface device, network interface card, a host fabric interface (HFI), or host bus adapter (HBA), and such examples can be interchangeable. Packet processing device 600 can be coupled to one or more servers using a bus, PCIe, CXL, or DDR. Packet processing device 600 may be embodied as part of a system-on-a-chip (SoC) that includes one or more processors, or included on a multichip package that also contains one or more processors.

Some examples of packet processing device 600 are part of an Infrastructure Processing Unit (IPU) or data processing unit (DPU) or utilized by an IPU or DPU. An xPU can refer at least to an IPU, DPU, GPU, GPGPU, or other processing units (e.g., accelerator devices). An IPU or DPU can include a network interface with one or more programmable pipelines or fixed function processors to perform offload of operations that could have been performed by a CPU. The IPU or DPU can include one or more memory devices. In some examples, the IPU or DPU can perform virtual switch operations, manage storage transactions (e.g., compression, cryptography, virtualization), and manage operations performed on other IPUs, DPUs, servers, or devices.

Packet processing interface 600 can include transceiver 602, processors 604, FPGAs 605, transmit queue 606, receive queue 608, memory 610, and bus interface 612, and DMA engine 652. Transceiver 602 can be capable of receiving and transmitting packets in conformance with the applicable protocols such as Ethernet as described in IEEE 802.3, although other protocols may be used. Transceiver 602 can receive and transmit packets from and to a network via a network medium (not depicted). Transceiver 602 can include PHY circuitry 614 and media access control (MAC) circuitry 616. PHY circuitry 614 can include encoding and decoding circuitry (not shown) to encode and decode data packets according to applicable physical layer specifications or standards. MAC circuitry 616 can be configured to perform MAC address filtering on received packets, process MAC headers of received packets by verifying data integrity, remove preambles and padding, and provide packet content for processing by higher layers. MAC circuitry 616 can be configured to assemble data to be transmitted into packets, that include destination and source addresses along with network control information and error detection hash values.

Processors 604 can be a combination of a: processor, core, graphics processing unit (GPU), field programmable gate array (FPGA), application specific integrated circuit (ASIC), or other programmable hardware device that allow programming of packet processing device 600. For example, a "smart network interface" or SmartNIC can provide packet processing capabilities in the packet processing device using processors 604.

Processors 604 can execute a virtual switch to provide virtual machine-to-virtual machine communications for virtual machines (or other VEEs) in a same server or among different servers.

Processors 604 can include a programmable processing pipeline that is programmable by P4, C, Python, Broadcom Network Programming Language (NPL), or x86 compatible executable binaries or other executable binaries. A programmable processing pipeline can include one or more match-action units (MAUs) that can be configured by one or more of a virtual switch, first control plane, second control plane, or third control plane, as described herein. Processors, FPGAs, other specialized processors, controllers, devices, and/or circuits can be used utilized for packet processing or packet modification. Ternary content-addressable memory (TCAM) can be used for parallel match-action or look-up operations on packet header content.

Packet allocator 624 can provide distribution of received packets for processing by multiple CPUs or cores using receive side scaling (RSS). When packet allocator 624 uses RSS, packet allocator 624 can calculate a hash or make another determination based on contents of a received packet to determine which CPU or core is to process a packet.

Interrupt coalesce 622 can perform interrupt moderation whereby network interface interrupt coalesce 622 waits for multiple packets to arrive, or for a time-out to expire, before generating an interrupt to host system to process received packet(s). Receive Segment Coalescing (RSC) can be performed by packet processing device 600 whereby portions of incoming packets are combined into segments of a packet. Packet processing device 600 provides this coalesced packet to an application.

Direct memory access (DMA) engine 652 can copy a packet header, packet payload, and/or descriptor directly from host memory to the network interface or vice versa, instead of copying the packet to an intermediate buffer at the host and then using another copy operation from the intermediate buffer to the destination buffer.

Memory 610 can be any type of volatile or non-volatile memory device and can store any queue or instructions used to program packet processing device 600. Transmit queue 606 can include data or references to data for transmission by network interface. Receive queue 608 can include data or references to data that was received by network interface from a network. Descriptor queues 620 can include descriptors that reference data or packets in transmit queue 606 or receive queue 608. Bus interface 612 can provide an interface with host device (not depicted). For example, bus interface 612 can be compatible with or based at least in part on PCI, PCI Express, PCI-x, Serial ATA, and/or USB (although other interconnection standards may be used), or proprietary variations thereof.

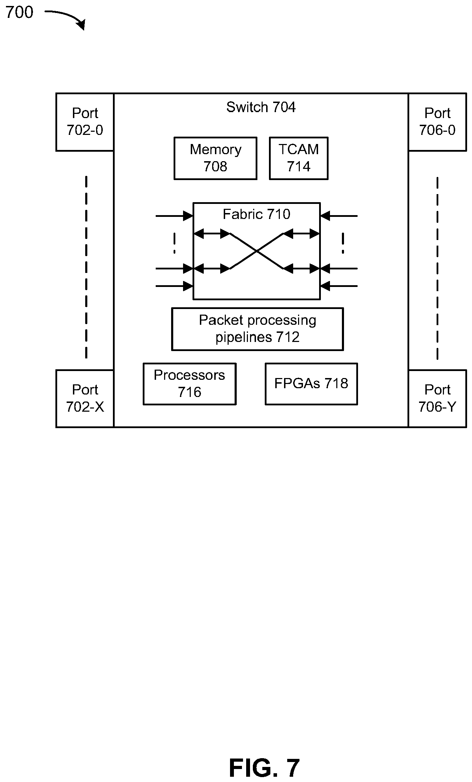

FIG. 7 depicts an example switch. Various device and processor resources in the switch can be programmed using one or more of a virtual switch, first control plane, second control plane, or third control plane, as described herein. Switch can receive a single packet from the source and sends one copy to one of the recipients. Switch 704 can route packets or frames of any format or in accordance with any specification from any port 702-0 to 702-X to any of ports 706-0 to 706-Y (or vice versa). Any of ports 702-0 to 702-X can be connected to a network of one or more interconnected devices. Similarly, any of ports 706-0 to 706-Y can be connected to a network of one or more interconnected devices.

In some examples, switch fabric 710 can provide routing of packets from one or more ingress ports for processing prior to egress from switch 704. Switch fabric 710 can be implemented as one or more multi-hop topologies, where example topologies include torus, butterflies, buffered multi-stage, etc., or shared memory switch fabric (SMSF), among other implementations. SMSF can be any switch fabric connected to ingress ports and all egress ports in the switch, where ingress subsystems write (store) packet segments into the fabric's memory, while the egress subsystems read (fetch) packet segments from the fabric's memory.

Memory 708 can be configured to store packets received at ports prior to egress from one or more ports. Packet processing pipelines 712 can determine which port to transfer packets or frames to using a table that maps packet characteristics with an associated output port. Packet processing pipelines 712 can be configured to perform match-action on received packets to identify packet processing rules and next hops using information stored in a ternary content-addressable memory (TCAM) tables or exact match tables in some embodiments. For example, match-action tables or circuitry can be used whereby a hash of a portion of a packet is used as an index to find an entry. Packet processing pipelines 712 can implement access control list (ACL) or packet drops due to queue overflow.

Packet processing pipelines 712 can be configured by one or more of a virtual switch, first control plane, second control plane, or third control plane, as described herein. Configuration of operation of packet processing pipelines 712, including its data plane, can be programmed using example programming languages and manners described herein. Processors 716 and FPGAs 718 can be utilized for packet processing or modification. In some examples, processors 716 can execute a virtual switch to provide virtual machine-to-virtual machine communications for virtual machines (or other VEEs) in a same server or among different servers.

FIG. 8 depicts an example system. Components of system 800 (e.g., processor 810, network interface 850, and so forth) to be programmed using one or more of a virtual switch, first control plane, second control plane, or third control plane, as described herein. System 800 includes processor 810, which provides processing, operation management, and execution of instructions for system 800. Processor 810 can include any type of microprocessor, central processing unit (CPU), graphics processing unit (GPU), processing core, or other processing hardware to provide processing for system 800, or a combination of processors. Processor 810 controls the overall operation of system 800, and can be or include, one or more programmable general-purpose or special-purpose microprocessors, digital signal processors (DSPs), programmable controllers, application specific integrated circuits (ASICs), programmable logic devices (PLDs), or the like, or a combination of such devices.

In one example, system 800 includes interface 812 coupled to processor 810, which can represent a higher speed interface or a high throughput interface for system components that needs higher bandwidth connections, such as memory subsystem 820 or graphics interface components 840, or accelerators 842. Interface 812 represents an interface circuit, which can be a standalone component or integrated onto a processor die. Where present, graphics interface 840 interfaces to graphics components for providing a visual display to a user of system 800. In one example, graphics interface 840 can drive a high definition (HD) display that provides an output to a user. High definition can refer to a display having a pixel density of approximately 100 PPI (pixels per inch) or greater and can include formats such as full HD (e.g., 1080p), retina displays, 4K (ultra-high definition or UHD), or others. In one example, the display can include a touchscreen display. In one example, graphics interface 840 generates a display based on data stored in memory 830 or based on operations executed by processor 810 or both. In one example, graphics interface 840 generates a display based on data stored in memory 830 or based on operations executed by processor 810 or both.

Accelerators 842 can be a fixed function or programmable offload engine that can be accessed or used by a processor 810. For example, an accelerator among accelerators 842 can provide compression (DC) capability, cryptography services such as public key encryption (PKE), cipher, hash/authentication capabilities, decryption, or other capabilities or services. In some embodiments, in addition or alternatively, an accelerator among accelerators 842 provides field select controller capabilities as described herein. In some cases, accelerators 842 can be integrated into a CPU socket (e.g., a connector to a motherboard or circuit board that includes a CPU and provides an electrical interface with the CPU). For example, accelerators 842 can include a single or multi-core processor, graphics processing unit, logical execution unit single or multi-level cache, functional units usable to independently execute programs or threads, application specific integrated circuits (ASICs), neural network processors (NNPs), programmable control logic, and programmable processing elements such as field programmable gate arrays (FPGAs) or programmable logic devices (PLDs). Accelerators 842 can provide multiple neural networks, CPUs, processor cores, general purpose graphics processing units, or graphics processing units can be made available for use by artificial intelligence (AI) or machine learning (ML) models. For example, the AI model can use or include one or more of: a reinforcement learning scheme, Q-learning scheme, deep-Q learning, or Asynchronous Advantage Actor-Critic (A3C), combinatorial neural network, recurrent combinatorial neural network, or other AI or ML model. Multiple neural networks, processor cores, or graphics processing units can be made available for use by AI or ML models.

Memory subsystem 820 represents the main memory of system 800 and provides storage for code to be executed by processor 810, or data values to be used in executing a routine. Memory subsystem 820 can include one or more memory devices 830 such as read-only memory (ROM), flash memory, one or more varieties of random access memory (RAM) such as DRAM, or other memory devices, or a combination of such devices. Memory 830 stores and hosts, among other things, operating system (OS) 832 to provide a software platform for execution of instructions in system 800. Additionally, applications 834 can execute on the software platform of OS 832 from memory 830. Applications 834 represent programs that have their own operational logic to perform execution of one or more functions. Processes 836 represent agents or routines that provide auxiliary functions to OS 832 or one or more applications 834 or a combination. OS 832, applications 834, and processes 836 provide software logic to provide functions for system 800. In one example, memory subsystem 820 includes memory controller 822, which is a memory controller to generate and issue commands to memory 830. It can be understood that memory controller 822 could be a physical part of processor 810 or a physical part of interface 812. For example, memory controller 822 can be an integrated memory controller, integrated onto a circuit with processor 810.

In some examples, OS 832 can be Linux^{®}, Windows^{®} Server or personal computer, FreeBSD^{®}, Android^{®}, MacOS^{®}, iOS^{®}, VMware vSphere, openSUSE, RHEL, CentOS, Debian, Ubuntu, or any other operating system. The OS and driver can execute on one or more processors sold or designed by Intel^{®}, ARM^{®}, AMD^{®}, Qualcomm^{®}, IBM^{®}, Nvidia^{®}, Broadcom^{®}, Texas Instruments^{®}, among others.

Applications 834 and/or processes 836 can refer instead or additionally to a virtual machine (VM), container, microservice, processor, or other software. Various examples described herein can perform an application composed of microservices, where a microservice runs in its own process and communicates using protocols (e.g., application program interface (API), a Hypertext Transfer Protocol (HTTP) resource API, message service, remote procedure calls (RPC), or Google RPC (gRPC)). Microservices can communicate with one another using a service mesh and be executed in one or more data centers or edge networks. Microservices can be independently deployed using centralized management of these services. The management system may be written in different programming languages and use different data storage technologies. A microservice can be characterized by one or more of: polyglot programming (e.g., code written in multiple languages to capture additional functionality and efficiency not available in a single language), or lightweight container or virtual machine deployment, and decentralized continuous microservice delivery.

A virtualized execution environment (VEE) can include at least a virtual machine or a container. A virtual machine (VM) can be software that runs an operating system and one or more applications. A VM can be defined by specification, configuration files, virtual disk file, non-volatile random access memory (NVRAM) setting file, and the log file and is backed by the physical resources of a host computing platform. A VM can include an operating system (OS) or application environment that is installed on software, which imitates dedicated hardware. The end user has the same experience on a virtual machine as they would have on dedicated hardware. Specialized software, called a hypervisor, emulates the PC client or server's CPU, memory, hard disk, network and other hardware resources completely, enabling virtual machines to share the resources. The hypervisor can emulate multiple virtual hardware platforms that are isolated from another, allowing virtual machines to run Linux^{®}, Windows^{®} Server, VMware ESXi, and other operating systems on the same underlying physical host.

A container can be a software package of applications, configurations and dependencies so the applications run reliably on one computing environment to another. Containers can share an operating system installed on the server platform and run as isolated processes. A container can be a software package that contains everything the software needs to run such as system tools, libraries, and settings. Containers may be isolated from the other software and the operating system itself. The isolated nature of containers provides several benefits. First, the software in a container will run the same in different environments. For example, a container that includes PHP and MySQL can run identically on both a Linux^{®} computer and a Windows^{®} machine. Second, containers provide added security since the software will not affect the host operating system. While an installed application may alter system settings and modify resources, such as the Windows registry, a container can only modify settings within the container.

While not specifically illustrated, it will be understood that system 800 can include one or more buses or bus systems between devices, such as a memory bus, a graphics bus, interface buses, or others. Buses or other signal lines can communicatively or electrically couple components together, or both communicatively and electrically couple the components. Buses can include physical communication lines, point-to-point connections, bridges, adapters, controllers, or other circuitry or a combination. Buses can include, for example, one or more of a system bus, a Peripheral Component Interconnect (PCI) bus, a Hyper Transport or industry standard architecture (ISA) bus, a small computer system interface (SCSI) bus, a universal serial bus (USB), or an Institute of Electrical and Electronics Engineers (IEEE) standard 1394 bus (Firewire).

In one example, system 800 includes interface 814, which can be coupled to interface 812. In one example, interface 814 represents an interface circuit, which can include standalone components and integrated circuitry. In one example, multiple user interface components or peripheral components, or both, couple to interface 814. Network interface 850 provides system 800 the ability to communicate with remote devices (e.g., servers or other computing devices) over one or more networks. Network interface 850 can include an Ethernet adapter, wireless interconnection components, cellular network interconnection components, USB (universal serial bus), or other wired or wireless standards-based or proprietary interfaces. Network interface 850 can transmit data to a device that is in the same data center or rack or a remote device, which can include sending data stored in memory.

Some examples of network interface 850 are part of a packet processing device, an Infrastructure Processing Unit (IPU) or data processing unit (DPU) or utilized by an IPU or DPU. An xPU can refer at least to an IPU, DPU, GPU, GPGPU, or other processing units (e.g., accelerator devices). An IPU or DPU can include a network interface with one or more programmable pipelines or fixed function processors to perform offload of operations that could have been performed by a CPU. The IPU or DPU can include one or more memory devices. In some examples, the IPU or DPU can perform virtual switch operations, manage storage transactions (e.g., compression, cryptography, virtualization), and manage operations performed on other IPUs, DPUs, servers, or devices.

In some examples, system 800 includes one or more input/output (I/O) interface(s) 860. I/O interface 860 can include one or more interface components through which a user interacts with system 800 (e.g., audio, alphanumeric, tactile/touch, or other interfacing). Peripheral interface 870 can include any hardware interface not specifically mentioned above. Peripherals refer generally to devices that connect dependently to system 800. A dependent connection is one where system 800 provides the software platform or hardware platform or both on which operation executes, and with which a user interacts.

In one example, system 800 includes storage subsystem 880 to store data in a nonvolatile manner. In one example, in certain system implementations, at least certain components of storage 880 can overlap with components of memory subsystem 820. Storage subsystem 880 includes storage device(s) 884, which can be or include any conventional medium for storing large amounts of data in a nonvolatile manner, such as one or more magnetic, solid state, or optical based disks, or a combination. Storage 884 holds code or instructions and data 886 in a persistent state (e.g., the value is retained despite interruption of power to system 800). Storage 884 can be generically considered to be a "memory," although memory 830 is typically the executing or operating memory to provide instructions to processor 810. Whereas storage 884 is nonvolatile, memory 830 can include volatile memory (e.g., the value or state of the data is indeterminate if power is interrupted to system 800). In one example, storage subsystem 880 includes controller 882 to interface with storage 884. In one example controller 882 is a physical part of interface 814 or processor 810 or can include circuits or logic in both processor 810 and interface 814.

A volatile memory is memory whose state (and therefore the data stored in it) is indeterminate if power is interrupted to the device. Dynamic volatile memory uses refreshing the data stored in the device to maintain state. One example of dynamic volatile memory incudes DRAM (Dynamic Random Access Memory), or some variant such as Synchronous DRAM (SDRAM). An example of a volatile memory include a cache. A memory subsystem as described herein may be compatible with a number of memory technologies, such as those consistent with specifications from JEDEC (Joint Electronic Device Engineering Council) or others or combinations of memory technologies, and technologies based on derivatives or extensions of such specifications.

A non-volatile memory (NVM) device is a memory whose state is determinate even if power is interrupted to the device. In one embodiment, the NVM device can comprise a block addressable memory device, such as NAND technologies, or more specifically, multi-threshold level NAND flash memory (for example, Single-Level Cell ("SLC"), Multi-Level Cell ("MLC"), Quad-Level Cell ("QLC"), Tri-Level Cell ("TLC"), or some other NAND). A NVM device can also comprise a byte-addressable write-in-place three dimensional cross point memory device, or other byte addressable write-in-place NVM device (also referred to as persistent memory), such as single or multi-level Phase Change Memory (PCM) or phase change memory with a switch (PCMS), Intel^{®} Optane^{™} memory, NVM devices that use chalcogenide phase change material (for example, chalcogenide glass), a combination of one or more of the above, or other memory.

A power source (not depicted) provides power to the components of system 800. More specifically, power source typically interfaces to one or multiple power supplies in system 800 to provide power to the components of system 800. In one example, the power supply includes an AC to DC (alternating current to direct current) adapter to plug into a wall outlet. Such AC power can be renewable energy (e.g., solar power) power source. In one example, power source includes a DC power source, such as an external AC to DC converter. In one example, power source or power supply includes wireless charging hardware to charge via proximity to a charging field. In one example, power source can include an internal battery, alternating current supply, motion-based power supply, solar power supply, or fuel cell source.

In an example, system 800 can be implemented using interconnected compute sleds of processors, memories, storages, network interfaces, and other components. High speed interconnects can be used such as: Ethernet (IEEE 802.3), remote direct memory access (RDMA), InfiniBand, Internet Wide Area RDMA Protocol (iWARP), Transmission Control Protocol (TCP), User Datagram Protocol (UDP), quick UDP Internet Connections (QUIC), RDMA over Converged Ethernet (RoCE), Peripheral Component Interconnect express (PCIe), Intel QuickPath Interconnect (QPI), Intel Ultra Path Interconnect (UPI), Intel On-Chip System Fabric (IOSF), Omni-Path, Compute Express Link (CXL), HyperTransport, high-speed fabric, NVLink, Advanced Microcontroller Bus Architecture (AMBA) interconnect, OpenCAPI, Gen-Z, Infinity Fabric (IF), Cache Coherent Interconnect for Accelerators (CCIX), 3GPP Long Term Evolution (LTE) (4G), 3GPP 5G, and variations thereof. Data can be copied or stored to virtualized storage nodes or accessed using a protocol such as NVMe over Fabrics (NVMe-oF) or NVMe.

Embodiments herein may be implemented in various types of computing, smart phones, tablets, personal computers, and networking equipment, such as switches, routers, racks, and blade servers such as those employed in a data center and/or server farm environment. The servers used in data centers and server farms comprise arrayed server configurations such as rack-based servers or blade servers. These servers are interconnected in communication via various network provisions, such as partitioning sets of servers into Local Area Networks (LANs) with appropriate switching and routing facilities between the LANs to form a private Intranet. For example, cloud hosting facilities may typically employ large data centers with a multitude of servers. A blade comprises a separate computing platform that is configured to perform server-type functions, that is, a "server on a card." Accordingly, a blade includes components common to conventional servers, including a main printed circuit board (main board) providing internal wiring (e.g., buses) for coupling appropriate integrated circuits (ICs) and other components mounted to the board.

In some examples, network interface and other embodiments described herein can be used in connection with a base station (e.g., 3G, 4G, 5G and so forth), macro base station (e.g., 5G networks), picostation (e.g., an IEEE 802.11 compatible access point), nanostation (e.g., for Point-to-MultiPoint (PtMP) applications), on-premises data centers, off-premises data centers, edge network elements, fog network elements, and/or hybrid data centers (e.g., data center that use virtualization, cloud and software-defined networking to deliver application workloads across physical data centers and distributed multi-cloud environments).

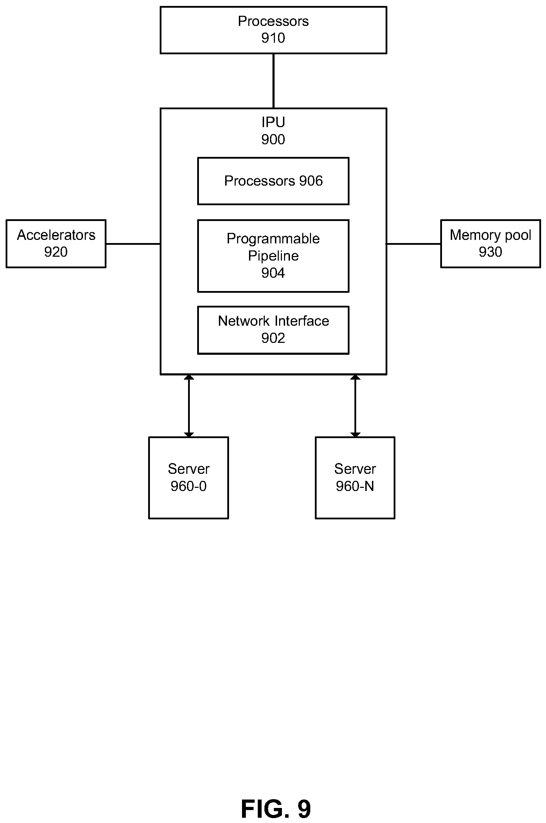

FIG. 9 depicts an example system. In this system, IPU 900 manages performance of one or more processes using one or more of processors 906, processors 910, accelerators 920, memory pool 930, or servers 940-0 to 940-N, where N is an integer of 1 or more. In some examples, processors 906 of IPU 900 can execute one or more processes, applications, VMs, containers, microservices, and so forth that request performance of workloads by one or more of: processors 910, accelerators 920, memory pool 930, and/or servers 940-0 to 940-N. IPU 900 can utilize network interface 902 or one or more device interfaces to communicate with processors 910, accelerators 920, memory pool 930, and/or servers 940-0 to 940-N. IPU 900 can utilize programmable pipeline 904 to process packets that are to be transmitted from network interface 902 or packets received from network interface 902. IPU 900 can receive address translations for use to write or read data, described herein. Programmable pipeline 904 can be performed using one or more of a virtual switch, first control plane, second control plane, or third control plane, as described herein.

Various examples may be implemented using hardware elements, software elements, or a combination of both. In some examples, hardware elements may include devices, components, processors, microprocessors, circuits, circuit elements (e.g., transistors, resistors, capacitors, inductors, and so forth), integrated circuits, ASICs, PLDs, DSPs, FPGAs, memory units, logic gates, registers, semiconductor device, chips, microchips, chip sets, and so forth. In some examples, software elements may include software components, programs, applications, computer programs, application programs, system programs, machine programs, operating system software, middleware, firmware, software modules, routines, subroutines, functions, methods, procedures, software interfaces, APIs, instruction sets, computing code, computer code, code segments, computer code segments, words, values, symbols, or any combination thereof. Determining whether an example is implemented using hardware elements and/or software elements may vary in accordance with any number of factors, such as desired computational rate, power levels, heat tolerances, processing cycle budget, input data rates, output data rates, memory resources, data bus speeds and other design or performance constraints, as desired for a given implementation. A processor can be one or more combination of a hardware state machine, digital control logic, central processing unit, or any hardware, firmware and/or software elements.

Some examples may be implemented using or as an article of manufacture or at least one computer-readable medium. A computer-readable medium may include a non-transitory storage medium to store logic. In some examples, the non-transitory storage medium may include one or more types of computer-readable storage media capable of storing electronic data, including volatile memory or non-volatile memory, removable or non-removable memory, erasable or non-erasable memory, writeable or re-writeable memory, and so forth. In some examples, the logic may include various software elements, such as software components, programs, applications, computer programs, application programs, system programs, machine programs, operating system software, middleware, firmware, software modules, routines, subroutines, functions, methods, procedures, software interfaces, API, instruction sets, computing code, computer code, code segments, computer code segments, words, values, symbols, or any combination thereof.

According to some examples, a computer-readable medium may include a non-transitory storage medium to store or maintain instructions that when executed by a machine, computing device or system, cause the machine, computing device or system to perform methods and/or operations in accordance with the described examples. The instructions may include any suitable type of code, such as source code, compiled code, interpreted code, executable code, static code, dynamic code, and the like. The instructions may be implemented according to a predefined computer language, manner or syntax, for instructing a machine, computing device or system to perform a certain function. The instructions may be implemented using any suitable high-level, low-level, object-oriented, visual, compiled and/or interpreted programming language.

One or more aspects of at least one example may be implemented by representative instructions stored on at least one machine-readable medium which represents various logic within the processor, which when read by a machine, computing device or system causes the machine, computing device or system to fabricate logic to perform the techniques described herein. Such representations, known as "IP cores" may be stored on a tangible, machine readable medium and supplied to various customers or manufacturing facilities to load into the fabrication machines that actually make the logic or processor.

The appearances of the phrase "one example" or "an example" are not necessarily all referring to the same example or embodiment. Any aspect described herein can be combined with any other aspect or similar aspect described herein, regardless of whether the aspects are described with respect to the same figure or element. Division, omission or inclusion of block functions depicted in the accompanying figures does not infer that the hardware components, circuits, software and/or elements for implementing these functions would necessarily be divided, omitted, or included in examples.

Some examples may be described using the expression "coupled" and "connected" along with their derivatives. These terms are not necessarily intended as synonyms for another. For example, descriptions using the terms "connected" and/or "coupled" may indicate that two or more elements are in direct physical or electrical contact with another. The term "coupled," however, may also mean that two or more elements are not in direct contact with another, but yet still co-operate or interact with another.

The terms "first," "second," and the like, herein do not denote any order, quantity, or importance, but rather are used to distinguish one element from another. The terms "a" and "an" herein do not denote a limitation of quantity, but rather denote the presence of at least one of the referenced items. The term "asserted" used herein with reference to a signal denote a state of the signal, in which the signal is active, and which can be achieved by applying any logic level either logic 0 or logic 1 to the signal. The terms "follow" or "after" can refer to immediately following or following after some other event or events. Other sequences of operations may also be performed according to alternative examples. Furthermore, additional operations may be added or removed depending on the particular applications. Any combination of changes can be used and one of ordinary skill in the art with the benefit of this disclosure would understand the many variations, modifications, and alternative examples thereof.

Disjunctive language such as the phrase "at least one of X, Y, or Z," unless specifically stated otherwise, is otherwise understood within the context as used in general to present that an item, term, etc., may be either X, Y, or Z, or any combination thereof (e.g., X, Y, and/or Z). Thus, such disjunctive language is not generally intended to, and should not, imply that certain examples require at least one of X, at least one of Y, or at least one of Z to be present. Additionally, conjunctive language such as the phrase "at least one of X, Y, and Z," unless specifically stated otherwise, should also be understood to mean X, Y, Z, or any combination thereof, including "X, Y, and/or Z.'"

Illustrative examples of the devices, systems, and methods disclosed herein are provided below. An example of the devices, systems, and methods may include any one or more, and any combination of, the examples described below.

Example 1 includes one or more examples, and includes at least one non-transitory computer-readable medium comprising instructions stored thereon, that if executed by one or more processors cause the one or more processors to: perform a virtual switch to provide configurations from multiple control planes to configure packet processing actions to be performed by a programmable pipeline of a packet processing device, wherein the virtual switch is to provide inter-virtual execution environment communications and wherein the programmable pipeline is configured using a programming language.

Example 2 includes one or more examples, wherein the virtual switch is consistent with Open vSwitch, VPP, or Stratum.

Example 3 includes one or more examples, wherein a programming language of at least one of the multiple control planes comprises Openflow and the programming language comprises one or more of: Programming Protocol-independent Packet Processors (P4), C, Python, Broadcom Network Programming Language (NPL), Linux eBPF, or x86 compatible executable binaries or other executable binaries.

Example 4 includes one or more examples, and includes instructions stored thereon, that if executed by one or more processors cause the one or more processors to: receive a configuration of table entry format and configure the programmable pipeline with at least one configuration from one or more of the multiple control planes in a format consistent with the received table entry format.

Example 5 includes one or more examples, wherein the multiple control planes comprise two or more of: a virtual switch controller, runtime server for the programmable pipeline, or kernel controller.

Example 6 includes one or more examples, wherein the virtual switch controller configures the programmable pipeline with header field value matches and association action(s) related to one or more of: port selection, enabling of packet mirroring, or VXLAN utilization.

Example 7 includes one or more examples, wherein the runtime server for the programmable pipeline configures the programmable pipeline with header field value matches and association actions related to one or more of: tunnels, mirroring, security group, connection tracking, forwarding, sampling of a flow to determine statistics, or link aggregation group (LAG).

Example 8 includes one or more examples, wherein the kernel controller configures the programmable pipeline with one or more of: routing determination and tunneling.

Example 9 includes one or more examples, wherein the packet processing device comprises one or more of: a network interface controller (NIC), a remote direct memory access (RDMA)-enabled NIC, SmartNIC, router, switch, forwarding element, infrastructure processing unit (IPU), or data processing unit (DPU).

Example 10 includes one or more examples, and includes an apparatus comprising: a packet processing device comprising a programmable packet processing pipeline that is configured using a virtual switch, wherein: the programmable packet processing pipeline is to receive configurations from multiple control planes via the virtual switch to configure packet processing actions, the virtual switch is to provide inter-virtual execution environment communications, and the programmable packet processing pipeline is configured using a programming language.

Example 11 includes one or more examples, wherein the virtual switch is consistent with Open vSwitch, VPP, or Stratum.

Example 12 includes one or more examples, wherein a programming language of at least one of the multiple control planes comprises Openflow and the programming language comprises one or more of: Programming Protocol-independent Packet Processors (P4), C, Python, Broadcom Network Programming Language (NPL), Linux eBPF, or x86 compatible executable binaries or other executable binaries.

Example 13 includes one or more examples, wherein the multiple control planes comprise two or more of: a virtual switch controller, runtime server for the programmable packet processing pipeline, or kernel controller.

Example 14 includes one or more examples, wherein the virtual switch controller configures the programmable packet processing pipeline with header field value matches and association action(s) related to one or more of: port selection, enabling of mirroring, or VXLAN utilization.

Example 15 includes one or more examples, wherein the runtime server for the programmable packet processing pipeline configures the programmable packet processing pipeline with header field value matches and association actions related to one or more of: tunnels, mirroring, security group, connection tracking, forwarding, sampling of a flow to determine statistics, or link aggregation group (LAG).

Example 16 includes one or more examples, wherein the kernel controller configures the programmable packet processing pipeline with one or more of: routing determination and tunneling.

Example 17 includes one or more examples, and includes a server that is to execute the virtual switch, wherein the server is communicatively coupled to the packet processing device.

Example 18 includes one or more examples, and includes a data center that comprises the server and a second packet processing device, wherein the packet processing device is to transmit packets processed by the programmable packet processing pipeline to the second packet processing device.

Example 19 includes one or more examples, and includes a method comprising: programming a programmable packet processing pipeline of a packet processing device using a virtual switch by multiple control planes.

Example 20 includes one or more examples, wherein a programming language of at least one of the multiple control planes comprises Openflow and the programming language comprises one or more of: Programming Protocol-independent Packet Processors (P4), C, Python, Broadcom Network Programming Language (NPL), Linux eBPF, or x86 compatible executable binaries or other executable binaries.

## Claims

1. At least one non-transitory computer-readable medium comprising instructions stored thereon, that if executed by one or more processors cause the one or more processors to:
perform a virtual switch to provide configurations from multiple control planes to configure packet processing actions to be performed by a programmable pipeline of a packet processing device, wherein the virtual switch is to provide inter-virtual execution environment communications and wherein the programmable pipeline is configured using a programming language.

2. The computer-readable medium of claim 1, wherein a programming language of at least one of the multiple control planes comprises Openflow and the programming language comprises one or more of: Programming Protocol-independent Packet Processors (P4), C, Python, Broadcom Network Programming Language (NPL), Linux eBPF, or x86 compatible executable binaries or other executable binaries.

3. The computer-readable medium of claim 1, comprising instructions stored thereon, that if executed by one or more processors cause the one or more processors to:
receive a configuration of table entry format and
configure the programmable pipeline with at least one configuration from one or more of the multiple control planes in a format consistent with the received table entry format.

4. The computer-readable medium of claim 1, wherein the multiple control planes comprise two or more of: a virtual switch controller, runtime server for the programmable pipeline, or kernel controller.

5. The computer-readable medium of claim 4, wherein the virtual switch controller configures the programmable pipeline with header field value matches and association action(s) related to one or more of: port selection, enabling of packet mirroring, or VXLAN utilization.

6. The computer-readable medium of claim 4, wherein the runtime server for the programmable pipeline configures the programmable pipeline with header field value matches and association actions related to one or more of: tunnels, mirroring, security group, connection tracking, forwarding, sampling of a flow to determine statistics, or link aggregation group (LAG).

7. The computer-readable medium of claim 4, wherein the kernel controller configures the programmable pipeline with one or more of: routing determination and tunneling.

8. An apparatus comprising:
a packet processing device comprising a programmable packet processing pipeline that is configured using a virtual switch, wherein:
the programmable packet processing pipeline is to receive configurations from multiple control planes via the virtual switch to configure packet processing actions,
the virtual switch is to provide inter-virtual execution environment communications, and
the programmable packet processing pipeline is configured using a programming language.

9. The apparatus of claim 8, wherein a programming language of at least one of the multiple control planes comprises Openflow and the programming language comprises one or more of: Programming Protocol-independent Packet Processors (P4), C, Python, Broadcom Network Programming Language (NPL), Linux eBPF, or x86 compatible executable binaries or other executable binaries.

10. The apparatus of claim 8, wherein the multiple control planes comprise two or more of: a virtual switch controller, runtime server for the programmable packet processing pipeline, or kernel controller and wherein the virtual switch controller configures the programmable packet processing pipeline with header field value matches and association action(s) related to one or more of: port selection, enabling of packet mirroring, or VXLAN utilization.

11. The apparatus of claim 8, wherein the multiple control planes comprise two or more of: a virtual switch controller, runtime server for the programmable packet processing pipeline, or kernel controller and wherein the runtime server for the programmable packet processing pipeline configures the programmable packet processing pipeline with header field value matches and association actions related to one or more of: tunnels, mirroring, security group, connection tracking, forwarding, sampling of a flow to determine statistics, or link aggregation group (LAG).

12. The apparatus of claim 8, wherein the multiple control planes comprise two or more of: a virtual switch controller, runtime server for the programmable packet processing pipeline, or kernel controller and wherein the kernel controller configures the programmable packet processing pipeline with one or more of: routing determination and tunneling.

13. The apparatus of claim 8, comprising a server that is to execute the virtual switch, wherein the server is communicatively coupled to the packet processing device.

14. The apparatus of claim 13, comprising a data center that comprises the server and a second packet processing device, wherein the packet processing device is to transmit packets processed by the programmable packet processing pipeline to the second packet processing device.

15. A method to perform actions in any preceding claim.
